# EUROPÄISCHE PATENTSCHRIFT

(11) **EP 3 680 301 B1**
(45) Veröffentlichungstag und Bekanntmachung des Hinweises auf die Patenterteilung: **15.05.2024**
(21) Anmeldenummer: 19217211.2
(22) Anmeldetag: 17.12.2019
(51) Int. Cl.: C09J 7/10, C09J 9/00, B29C 48/00, B29C 48/05, B29C 48/21, B29C 48/92, B33Y 70/10, C09J 123/04, C09J 123/08, C09J 123/10, D01F 1/10, D01F 8/04, D06M 11/76, D06M 11/79, D06M 11/56, D01F 8/06, D06M 23/08

(54) **VERFAHREN ZUM HERSTELLEN EINES KLEBSTOFFFILAMENTS UND KLEBSTOFFFILAMENT**
ADHESIVE FILAMENT AND METHOD OF PRODUCING AN ADHESIVE FILAMENT
PROCÉDÉ DE FABRICATION D'UN FILAMENT ADHÉSIF ET FILAMENT ADHÉSIF

(30) Priorität: 19.12.2018 DE 102018222372
(43) Veröffentlichungstag der Anmeldung: 15.07.2020
(73) Patentinhaber: tesa SE, 22848 Norderstedt (DE)
(72) Erfinder: VIRUS, Frank, 22305 Hamburg (DE); SCHWERTFEGER, Michael, 22147 Hamburg (DE); BENDEICH, Manuel, 22527 Hamburg (DE)
(74) Vertreter: tesa SE

(56) Entgegenhaltungen:
- EP-A1- 2 329 889
- US-A- 6 155 029

## Beschreibung

Die Erfindung betrifft ein Verfahren zum Herstellen eines Klebstofffilaments. Die Erfindung betrifft auch eine Vorrichtung zum Durchführen des Verfahrens, ein Klebstofffilament, eine Klebstoffrolle sowie ein gedrucktes Element.

Im Bereich der additiven Fertigung existiert eine Mehrzahl von Verfahren, mit denen Objekte generativ gefertigt werden können. Sie werden für die Herstellung von Prototypen, Werkzeugen und Endprodukten eingesetzt. Üblicherweise werden bei einem additiven Fertigungsverfahren Werkstücke Schicht-für-Schicht auf einer Bauplatte aufgebaut. Die Fertigung erfolgt also nicht materialabtragend aus einem massiven Körper wie beispielsweise beim Fräsen, sondern materialzufügend, also additiv. Werden unmittelbar Endprodukte erzeugt handelt es sich um das sog. "Direct Manufacturing". Dabei wird unter einem Endprodukt ein bestimmungsgemäß eingesetztes, marktfähiges Produkt mit Serieneigenschaften ab einer Stückzahl von eins verstanden.

Der schichtweise Aufbau der Endprodukte erfolgt durch Hinzufügen von Material oder durch Phasenübergang eines Materials vom flüssigen oder pulverförmigen in den festen Zustand. Die Fertigung erfolgt üblicherweise ohne Verwendung von Formen und speziellen Werkzeugen. Sehr bekannt ist unter anderem das Strangablegeverfahren (engl.: Fused Deposition Modelling - FDM^{®} oder auch Fused Filament Fabrication - FFF), bei dem ein beheizter Druckkopf mit einer Extruderdüse ein thermoplastisches Material zum Schmelzen bringt und das erweichte oder verflüssigte Material auf einer Bauplatte oder zum weiteren Schichtaufbau auf einem Produkt ablegt. Dieses Verfahren wird landläufig auch als "3D-Druck" bezeichnet. Das thermoplastische Material wird dem Druckkopf und der darin befindlichen Extruderdüse üblicherweise in Form eines sogenannten Filaments zugeführt. Dabei wird ein Filament von einer Spule abgewickelt und über Führungsösen und/oder -rollen einem beheizten Druckkopf zugeführt. Filamente bestehen üblicherweise aus Thermoplasten wie Polyethylen, Polypropylen, Polylactid oder ABS.

Während die Verarbeitung mit thermoplastischen Kunststoffen bereits sehr verbreitet ist, ist der Einsatz haftklebriger Materialien, also Haftklebemassen, kaum etabliert.

Aus der US 5,121,329 A ist eine Vorrichtung bekannt, um dreidimensionale Objekte zu erzeugen, indem von einem Ausgabekopf abgegebenes Material mit einer gesteuerten Rate auf ein Basiselement aufgebracht wird, bekannt. Diese dreidimensionalen Objekte können durch Ablagern wiederholter Schichten aus erstarrendem Material erzeugt werden, wobei die Materialien selbsthärtende Wachse, thermoplastische Harze, geschmolzene Metalle, zweiteilige Epoxide, schäumende Kunststoffe oder Glas sein können. Auch Heißklebemassen können eingesetzt werden.

Aus der Druckschrift EP 1 349 900 B1 sind ein Verfahren und eine Zusammensetzung zum Tintenstrahldrucken haftklebender Muster bekannt. Die Zusammensetzungen enthalten im Allgemeinen eine härtbare flüssige Zusammensetzung (d. H. druckempfindlichen Klebstoffvorläufer). Nach dem Aushärten wird ein druckempfindlicher Klebstoff gebildet.

Aus der Druckschrift EP 1 562 751 B1 ist ein Verfahren zur Herstellung eines klebenden Bauteils bekannt. Die Haftklebstoffbasis besitzt eine geringe Viskosität und kann beispielsweise mit einer Breitschlitzdüse oder durch Sprühen aufgetragen werden. Nach dem Auftragen der Haftklebstoffbasis wird diese vernetzt, bis eine vorbestimmte Viskosität erreicht ist. Das Vernetzen erfolgt beispielsweise durch Bestrahlen oder durch Erwärmen.

Diese vorgenannten Verfahren sind als Poly-Jet Modeling oder Multi Jet Modeling bekannt, bei denen ein Schicht-für-Schicht-Bauprozess durch Linie-für-Linie-Auftragen eines vernetzenden Materials, z. B. UV-vernetzend oder wärmevernetzend, erfolgt. Dabei werden ausschließlich geringviskose Klebstoffe auf ein Bauteil oder ein Trägermaterial auftragen und dann in einer von außen induzierten Vernetzungsreaktion die Viskosität des Klebstoffes erhöht.

Aus der Druckschrift EP 2 985 327 A1 ist ein Verfahren und eine Vorrichtung zur Herstellung einer Haftklebeschicht bekannt bestehend aus den Schritten: Aufbringen einer vernetzbaren Polymerzusammensetzung in eine Kavität einer Druckwalze, Induzieren oder Bewirken einer Vernetzungsreaktion zur Erzeugung einer zumindest teilweise vernetzten Haftklebeschicht und Entfernen der zumindest teilweise vernetzte Haftklebeschicht aus der Kavität.

Aus der Druckschrift DE 198 20 366 C2 ist es bekannt, Schablonen für Haftklebeschichten mit einem Reaktionsmedium zu füllen und anschließend unter Sauerstoff-Abschluss in einer UV-Strecke auszuhärten.

Bei diesen vorgenannten Verfahren handelt es sich um Druckprozesse, bei denen durch Abformen bzw. Ausfüllen von Hohlformen oder Schablonen Klebemassenformteile bereitgestellt werden.

Nachteilig ist, dass die bekannten Verfahren es nicht ermöglichen, höherviskose, haftklebrige Klebemassen mit dem Strangablegeverfahren zu verarbeiten und die Haftklebemasse konturscharf und schichtweise auf ein Bauteil oder Träger aufzutragen.

Aus der EP 2 329 889 A1 ist ein Verfahren zur Herstellung von mit Wachs umhüllten Heißschmelzklebstoffsträngen bekannt, bei dem die Wachsumhüllung in möglichst gleichmäßiger Dicke und dicht ausgestaltet wird. Dabei wird ein bereits abgekühlter Heißschmelzklebstotfstrang durch ein Bad mit geschmolzenem Wachs gezogen.

Die US 6 155 029 beschreibt ein Verfahren zum Verpacken von Schmelzklebstoffen, wobei der Heißschmelzklebstoff in einen nicht-klebrige Beschichtung eingeschlagen wird und in einem Überlappungsbereich verschlossen wird. Der umhüllte Schmelzklebstoff wird dann gekühlt und durch Quetschen in einzeln portionierbare Päckchen unterteilt.

Grundsätzlich ist es ein großes bisweilen ungelöstes Problem, Haftklebemassen in einem additiven Fertigungsverfahren zur Schicht-für-Schicht Herstellung von gedruckten Elementen einzusetzen. Insbesondere besteht das Problem, dass sich haftklebrige Materialien nicht oder nur unzureichend innerhalb einer Fertigungsmaschine für additive Fertigung befördern lassen, da sie sofort verkleben. Weiterhin ist der Transport und die Lagerung von haftklebrigen Klebstofffilamenten problematisch, da diese unmittelbar bei dem Kontakt mit anderen Gegenständen oder mit sich selbst verkleben.

Der Erfindung liegt daher die Aufgabe zugrunde, ein eingangs genanntes Verfahren zum Herstellen eines Klebstofffilaments bereitzustellen, welches sich verarbeiten lässt, ohne dabei zu verkleben.

Es ist in einem zweiten Aspekt Aufgabe der vorliegenden Erfindung, ein eingangs genanntes Klebstofffilament zur Verfügung zu stellen, dass einfach herstellbar ist und sich verarbeiten lässt, ohne dabei zu verkleben

Demgemäß betrifft die Erfindung ein Verfahren zum Herstellen eines Klebstofffilaments aus einer Haftklebemasse, mit den Schritten:
a) Bereitstellen der Haftklebemasse,
b) Formen der Haftklebemasse zu einem Materialstrang,
c) Aufbringen einer Passivierungsschicht auf der Oberfläche des Materialstrangs.
wobei in Schritt (c) die Passivierungsschicht durch ein Koextrusionsverfahren auf der Oberfläche des Materialstrangs aufgebracht wird.

Unter einem Materialstrang ist ein strangförmig geformtes Material zu verstehen, d. h. dass dessen Erstreckung in Längsrichtung um ein vielfaches größer ist, als dessen Erstreckung senkrecht zur Längsrichtung. Die Strangform eines Materialstrangs ist besonders geeignet um in additiven Fertigungsmaschinen eingesetzt zu werden, die nach dem Strangablegeverfahren funktionieren. Solche Materialstränge werden bevorzugt durch Extrusionsverfahren hergestellt und sind auch als Kunststofffilament bekannt. Unter Extrusionsverfahren sollen in Sinne dieser Erfindung alle Verfahren verstanden werden, bei denen feste bis dickflüssige härtbare Massen unter Druck kontinuierlich aus einer formgebenden Öffnung austreten. Weiterhin sind dem Fachmann die hier genannten Fertigungsmaschinen auch unter dem Begriff "3D-Drucker" bekannt. Üblicherweise werden in solchen Fertigungsmaschinen Kunststofffilamente eingesetzt. Vorzugsweise weist der Materialstrang einen kreisrunden Querschnitt auf. Dabei ist es besonders bevorzugt, dass der Durchmesser einige Millimeter beträgt. Ein Materialstrang kann aber auch andere Querschnittsformen aufweisen, z. B. quadratische, rechteckige, fünf-, sechs-, sieben- oder achteckige Querschnitte. Ebenso kann der Materialstrang eine komplexe Formgebung aufweisen, die aus einer Mehrzahl geometrischer Grundformen besteht. Der Durchmesser ist dann als der längste Abstand zwischen zwei Begrenzungen des Querschnitts des Materialstrangs zu verstehen.

Unter einer Haftklebemasse wird entsprechend dem allgemeinen Verständnis des Fachmanns eine viskoelastische Masse verstanden, welche in abgebundenem, trockenen Zustand bei Raumtemperatur permanent klebrig ist und klebfähig bleibt sowie durch leichten Anpressdruck auf einer Vielzahl von Substraten, wie z. B. Kunststoffe, Metalle, Glas, Stein, Holz oder Papier verklebt werden kann.

Vorzugsweise umfasst die Haftklebemasse mindestens einen Synthesekautschuk, wobei der bevorzugte Synthesekautschuk oder die bevorzugten Synthesekautschuke aus der Gruppe der statistisch copolymerisierten Styrol-Butadien-Kautschuke (SBR), der Styrolethylenbutadien Di- und Triblockcopolymere (SEBS), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt sind.

Vorzugsweise umfasst die Haftklebemasse mindestens eine Harzkomponente. Klebkraftsteigernde (klebrigmachende) Harze sind dabei vorteilhafter Weise zu einem Anteil von bis zu 70 Gew.-% bezogen auf die Gesamtmischung der Haftklebemasse umfasst. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Haftklebemasse wunschgemäß einzustellen. Im allgemeinen lassen sich alle mit den Nitrilkautschuken kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Der Gewichtsanteil der Harzkomponente in der Haftklebemasse beträgt zwischen 70 und 30 Gew.-%. Vorzugsweise beträgt der Gewichtsanteil zwischen 60 Gew.-% und 40 Gew.-%. In einer besonders bevorzugten Ausführung beträgt der Gewichtsanteil der Harzkomponente in der Haftklebemasse zwischen 55% und 45%. Die Harzkomponente kann auch ein Reaktivharz sein. Eine sehr bevorzugte Gruppe der Reaktivharze umfasst Epoxy-Harze. Das Molekulargewicht MW der bevorzugten Epoxy-Harze variiert von 100 g/mol bis zu maximal 10000 g/mol für polymere Epoxy-Harze. Die Epoxy-Harze umfassen zum Beispiel das Reaktionsprodukt aus Bisphenol A und Epichlorhydrin, Epichlorhydrin, Glycidyl Ester, das Reaktionsprodukt aus Epichlorhydrin und p-Amino Phenol.

Unter dem Begriff Aufbringen soll im Sinne der Erfindung das Auftragen eines Materials auf mindestens einen Teilbereich einer Oberfläche des Materialstrangs verstanden werden. Unter der Oberfläche soll die Oberfläche des Materialstrangs verstanden werden, die sich senkrecht zur Längsrichtung des Materialstrangs erstreckt. Diese Oberfläche gelangt bei dem Transport innerhalb einer Fertigungsmaschine üblicherweise mit Teilen der Maschine in Kontakt und würde ohne eine erfindungsgemäße Behandlung daher sofort an dieser haften. Stirnflächen des Materialstrangs, wie sie beispielsweise durch das Ablängen des Materialstrangs entstehen, können allerdings ebenfalls von dem Begriff der Oberfläche umfasst sein.

Unter einer Passivierungsschicht soll im Sinne dieser Anmeldung eine Schicht verstanden werden, die eine Anfassklebrigkeit des Materialstrangs reduziert. Grundsätzlich kann eine Passivierungsschicht aus Materialien bestehen, welche selbst nicht haftklebrig sind. Das Material aus dem die Passivierungsschicht besteht, wird im Sinne dieser Erfindung als Passivierungsmaterial bezeichnet. Durch das Aufbringen einer Passivierungsschicht wird die haftklebrige Oberfläche des Materialstrangs teilweise oder vollständig bedeckt. Dadurch lässt sich das Klebstofffilament dann einfacher handhaben und/oder verarbeiten.

Das Aufbringen einer Passivierungsschicht hat zur Folge, dass die Haftklebrigkeit der Oberfläche des Materialstrangs weniger stark ausgeprägt ist, d. h. die Anfassklebrigkeit wird geringer oder sogar soweit reduziert, dass keine Anfassklebrigkeit mehr vorhanden ist. Unter der Anfassklebrigkeit versteht ein Fachmann die Eigenschaft von Haftklebemassen, an einer Vielzahl von Materialien bei Berührung zu haften. Das Haften kann dabei mit oder auch ohne zusätzliche Druckeinwirkung (Anpressen) erfolgen. Die Anfassklebrigkeit ist dem Fachmann auch unter den Begriffen "Tack" oder "Klebrigkeit" bekannt. Um die Anfassklebrigkeit eines Haftklebenden Materials zu ermitteln existieren verschiedene Methoden, wie z. B. ASTM D 3121-94, AFERA-4015, FSTM-9 oder PSTC-11. Üblicherweise wird die Rolling-Ball-Messmethode verwendet welche dem Fachmann auch unter der Bezeichnung PSTC-6 bekannt ist. Bei der Rolling-Ball-Messmethode rollt eine Edelstahl-Kugellagerkugel von einer 65 mm hohen Rampe herunter und nimmt kinetische Energie auf. Am Ende der Rampe rollt die Kugel über ein plan ausgebreitetes Haftklebemassenmaterial, wobei die Kugel aufgrund der Anfassklebrigkeit abgebremst wird. Um ein erfindungsgemäßes Klebstofffilament zu prüfen, wird dazu das Haftklebemassenmaterial bevor die Kugel aufgesetzt wird mit dem erfindungsgemäßen Verfahren behandelt. Die Strecke bis zum Stillstand der Kugel wird gemessen und in Millimeter angegeben und stellt das Testergebnis dar. Die Konstruktion der Rampe und die Testanordnung sind in der PSTC-6 beschrieben und werden hier nicht weiter erläutert. Ergänzend zu der Testdefinition in der PSTC-6 sind zur Ermittlung der Anfassklebrigkeit Edelstahl-Kugellagerkugeln mit einem Durchmesser von 7/16 Zoll und einer Masse von 5,70 g ± 0,5 g einzusetzen, die vor einem Test mit Aceton gesäubert werden und jede Edelstahl-Kugellagerkugel nur einmal verwendet wird. Da diese Testmethode zudem temperaturempfindlich ist, wird die Prüfung bei einer Temperatur am Messplatz und der Kugeln von 23 °C ± 1 °C durchgeführt. Für Haftklebemassen mit einer hohen Anfassklebrigkeit ergeben sich als Messergebnis kurze Rollweiten der Edelstahl-Kugellagerkugel, üblicherweise wenige Zentimeter, während sich für Haftklebemassen mit einer niedrigen Anfassklebrigkeit lange Rollweiten der Edelstahl-Kugellagerkugel ergeben, üblicherweise mehrere 10 cm bis zu einem oder wenigen Metern.

Im Sinne dieser Erfindung weist die Oberfläche einer haftklebrigen Klebemasseschicht keine Anfassklebrigkeit mehr auf, wenn die Rolldistanz nach der Rolling-Ball-Methode eine Distanz von 40 cm oder mehr ergibt. Die Haftklebrigkeit ist dann so gering, dass eine Verwendung in einer Fertigungsmaschine das Klebstofffilament nicht mehr innerhalb der Maschine verklebt. Bevorzugt beträgt die Rolldistanz mehr als 50 cm, besonders bevorzugt beträgt die Rolldistanz mehr als 60 cm. Die Anfassklebrigkeit ist dann soweit reduziert, dass ein Verarbeiten in einer Fertigungsmaschine problemlos möglich ist. Insbesondere, wird die Anfassklebrigkeit des erfindungsgemäßen Klebstofffilaments soweit reduziert, dass es in einer Fertigungsmaschine befördert und einer Extruderdüse zugeführt wird.

Die Dicke einer Passivierungsschicht beträgt vorzugsweise zwischen 1 µm bis 500 µm. Besonders bevorzugt ist es, dass die Dicke zwischen 10 µm und 100 µm beträgt.

Ein Vorteil des erfindungsgemäßen Verfahrens besteht darin, dass Klebstofffilamente bereitgestellt werden können, die aus einer Haftklebemasse bestehen, jedoch in bestehenden Fertigungsanlagen für thermoplastische Kunststofffilamente eingesetzt werden können. Dabei kann es, abhängig von den Fertigungsmaschinen, erforderlich sein, dass einzelne Maschinenparameter angepasst werden, um eine Verarbeitung des Klebstofffilaments zu verbessern oder zu ermöglichen. Der geringe Gewichtsanteil der Passivierungsschicht beeinflusst die Eigenschaften der Haftklebemasse, insbesondere die Klebkraft, nur geringfügig bis gar nicht. Bei der Verarbeitung des erfindungsgemäßen Klebstofffilaments in einer Fertigungsmaschine wird das Klebstofffilament aufgeschmolzen wodurch die Haftklebemasse erweicht und die Passivierungsschicht in die Haftklebemasse eingearbeitet z. B. durch die Extruderdüse einer Fertigungsmaschine. Die Beeinflussungen der chemischen und adhäsiven Eigenschaften der Haftklebemasse durch die Passivierungsschicht sind daher vernachlässigbar klein.

Weiterhin ist an dem erfindungsgemäßen Verfahren vorteilhaft, dass es kosteneffizient ist und überwiegend mit bestehenden und gut verfügbaren Komponenten umgesetzt werden kann. Dass erfindungsgemäße Verfahren wiederlegt, auch die Vorurteile des Fachmanns, dass haftklebrige Materialien für Fertigungsmaschinen nicht geeignet sind, da sich diese nicht befördern lassen oder in einer Fertigungsmaschine verkleben.

Generell sind Koextrusionsverfahren bekannt. Bei der im Rahmen dieser Erfindung relevanten Koextrusion handelt es sich um die zweistufige Koextrusion, bei der aus wenigstens zwei Extrudern, die unterschiedlichen Materialien im Extrusionsverfahren bereitgestellt werden. Damit unterscheidet sich die zweistufige Koextrusion von der einstufigen Koextrusion, bei der unterschiedliche Materialien in einem Extrusionsverfahren, also in einem einzelnen Extruder, verarbeitet werden. Dies soll aber nicht ausschließen, dass bei einem Koextrusionsverfahren, welches mit wenigstens zwei Extrudern arbeitet, in jedem der Extruder nicht auch mehrere Materialien verarbeitet werden können. Gerade dies kann besonders bevorzugt sein, da sich die Haftklebemasse aus verschiedenen Materialkomponenten zusammensetzen kann und diese sich in vorteilhafter Weise in einem Extruder verarbeiten lassen, da die Materialkomponenten in dem Extruder aufgeschmolzen und gleichzeitig vermengt werden. So entsteht eine Haftklebemasse, deren Materialien weitestgehend homogen in dem Materialstrang verteilt sind.

Wenn ein Koextrusionsverfahren eingesetzt wird, um die Passivierungsschicht auf den Materialstrang aufzutragen, umfasst die Passivierungsschicht vorzugsweise ein thermoplastisches Material, insbesondere einen thermoplastischen Kunststoff. Insbesondere sind bevorzugt Ethylen-Vinylalkohol-Copolymer oder Polyethylen oder Hart-Polyethylen oder Polypropylen oder Polyethylenterephthalat um die Passivierungsschicht auszubilden. Besonders bevorzugt besteht die Passivierungsschicht aus Ethylen-Vinylacetat-Copolymer.

Bei dem erfindungsgemäßen Verfahren wird in einem ersten Extruder die Haftklebemasse verarbeitet und durch ein Extrusionswerkzeug als Materialstrang ausgeformt. Ein Extrusionswerkzeug ist eine speziell geformte Düse und auch bekannt als Matrize, Extrusionsmatrize oder Düse. In einem Extrusionswerkzeug ist wenigsten eine Einlassöffnung vorgesehen, durch die aus einem Extruder austretendes erweichtes Material in das Extrusionswerkzeug eintritt und in eine erste Anordnung von Kanälen geleitet wird. Diese erste Anordnung von Kanälen leitet das erweichte Material zu einer Austrittsöffnung des Extrusionswerkzeugs. Damit das erweichte Material in dem Extrusionswerkzeug nicht erstarrt, ist das Extrusionswerkzeug durch Heizelemente geheizt. Die Geometrie der Austrittsöffnung des Extrusionswerkzeugs bestimmt dann die Geometrie des Materialstrangs. Durch einen zweiten Extruder wird ein Passivierungsmaterial erweicht und bereitgestellt. Der zweite Extruder kann aber auch eine Extrusionspumpe oder eine Schmelzpumpe sein. Dieser zweite Extruder befördert das Passivierungsmaterial durch eine zweite Einlassöffnung in das Extrusionswerkzeug und wird durch eine zweite Anordnung von Kanälen zu der Austrittsöffnung des Extrusionswerkzeugs geleitet. Dabei ist unter einem erweichten Passivierungsmaterial ein Material zu verstehen, welches sich durch eine Temperatureinwirkung in einem Übergangsbereich zwischen einer flüssigen Phase, also einem flüssigen Zustand des Materials, und einer festen Phase, also einem erstarrten Zustand des Materials, befindet. Bei Kunststoffen, insbesondere bei thermoplastischen Kunststoffen, bildet sich solch ein Übergangsbereich zwischen fester und flüssiger Phase aus in der das Material bevorzugt verarbeitet wird. Die Temperaturen bei denen der Übergangsbereich beginnt und endet sind stark von dem Material abhängig ist und variieren in weiten Grenzen.

Das Extrusionswerkzeug ist so ausgebildet, dass das Passivierungsmaterial mindestens auf einen Teil der Oberfläche des Materialstrangs aufgebracht wird. Dies erfolgt dadurch, dass in dem Extrusionswerkzeug oder im Moment des Materialaustritts aus dem Extrusionswerkzeugs oder nach dem Materialaustritt aus dem Extrusionswerkzeug das Passivierungsmaterial auf den Materialstrang aufgebracht wird und dadurch die Passivierungsschicht ausbildet. Diese Passivierungsschicht umgibt den Materialstrang entweder vollständig oder die Passivierungsschicht ist nur teilweise auf den Materialstrang ausgebildet. In jedem Fall bildet sich aber ein geschichteter Aufbau. Auf den Teilen der Oberfläche, auf denen die Passivierungsschicht aufgebracht ist, ist der Materialstrang nicht mehr aber zumindest nur noch geringfügig haftklebrig.

Zumindest, wenn die Passivierungsschicht die vorgenannten Materialien umfasst, ergeben sich durch das Aufbringen der Passivierungsschicht auf den Materialstrang weitere Vorteile.

Zum einen weist eine Passivierungsschicht aus einem oder mehreren der vorgenannten Materialien eine Barrierewirkung auf. Das bedeutet, dass bereits durch eine dünne, Passivierungsschicht, mit den oben erwähnten Dicken, verhindert werden kann, dass Feuchtigkeit in die Haftklebemasse eindringt, da weder gasförmiges Wasser noch tropfenförmiges Wasser die Passivierungsschicht durchdringen kann. Mit anderen Worten verringert sich durch die Passivierungsschicht die Wasserdampfdurchlässigkeit (engl. Water Vapor Transmission Rate). Durch die Barrierewirkung der Passivierungsschicht wird aber auch das Eindringen, z. B. durch Diffusionsprozesse, von Gasen, z. B. Sauerstoff aus der Umgebungsluft, in die Haftklebemasse vermindert. Dadurch, dass die Passivierungsschicht das Eindringen von Wasser, Feuchte und Sauerstoff verringert, verlängert sich vorteilhafterweise die Lagerfähigkeit des Klebstofffilaments, da durch Wasser und Sauerstoff bedingte Alterungsprozesse der Haftklebemasse verlangsamt werden können. Es kann auch vorgesehen sein, dass einem Material welches die Passivierungsschicht bildet, Zusatzstoffe beigemengt werden, um die vorgenannten Eigenschaften zu erzielen.

Die Lagerfähigkeit des erfindungsgemäßen Klebstofffilaments lässt sich zudem verbessern und/oder Alterungsprozesse in dem erfindungsgemäßen Klebstofffilament lassen sich verringern, indem das thermoplastische Material lichtundurchlässig ist, insbesondere Licht aus einem ultravioletten Wellenlängenbereich absorbiert oder reflektiert. Diesen Effekt kann ein thermoplastisches Material an sich bereits aufweisen. Dem thermoplastischen Material können aber auch Zusätze beigefügt werden, die besonders geeignet sind, Licht zu absorbieren oder zu reflektieren. Durch Lichteinwirkung können chemische Reaktionen, insbesondere photo-chemische Reaktionen, in der Haftklebemasse ausgelöst werden, die dazu führen, dass die Haftklebemasse ihre Eigenschaften verändert. Beispielsweise kann sich die Klebkraft verringern oder die Elastizität der Haftklebemasse reduziert sich. Aber auch andere lichtinduzierte chemische Reaktionen können die Eigenschaften der Haftklebemasse negativ beeinflussen. Sofern die Passivierungsschicht lichtundurchlässig, insbesondere undurchlässig ist für UV-Licht, können diese Nachteile durch das erfindungsgemäße Klebstofffilament verringert oder beseitigt werden. Vorzugsweise ist die Farbe des thermoplastischen Materials dazu schwarz, beispielsweise durch die Beimengung von Pigmenten. Es kann auch vorgesehen sein, dass einem thermoplastischen Material neben den vorgenannten Zusatzstoffen ein oder mehrere weitere Zusatzstoffe beigemengt werden, um die vorgenannten Eigenschaften zu erzielen. Beispielsweise kann dem Passivierungsmaterial ein Alterungsschutzmittel beigemengt sein. Das Alterungsschutzmittel kann zudem auch nach dem Verarbeiten des Klebstofffilaments, also nach dem es in einer Extruderdüse einer Fertigungsmaschine aufgeschmolzen wurde und zu einem Element umgeformt wurde, aktiv bleiben, also das gedruckte Element vor Alterung schützen. Besonders vorteilhaft kann daran sein, dass das in dem Passivierungsmaterial enthaltene Alterungsschutzmittel, erst zum Zeitpunkt der Verarbeitung des Klebstofffilaments in die Haftklebemasse eingemischt oder durch die Extruderdüse eingearbeitet wird.

Ein weiterer Vorteil der Passivierungsschicht aus einem oder mehreren den vorgenannten Materialien besteht darin, dass sich das Klebstofffilament durch die verringerte Neigung zur Aufnahme von Feuchtigkeit in einer Verarbeitungsmaschine besser verarbeiten lässt. Durch die Aufnahme von Feuchtigkeit kann der Durchmesser des Klebstofffilaments ansteigen, wodurch das Risiko wächst, dass das Klebstofffilament in der Verarbeitungsmaschine blockiert und dann verkantet und/oder abknickt. Weitere Probleme bei der Verarbeitung können durch die Passivierungsschicht ebenfalls vermieden oder verringert werden. Nimmt ein Klebstofffilament Feuchtigkeit auf, z. B. über die Feuchtigkeit der Umgebungsluft, kann das zur Folge haben, dass die aufgenommene Feuchtigkeit beim Aufschmelzen in der Extruderdüse der Verarbeitungsmaschine freigesetzt wird. Durch die hohe Temperatur in der Extruderdüse, typischerweise zwischen 130 °C - 280 °C, dehnt sich der Wasserdampf stark aus und führt zu einem Druckanstieg innerhalb der Extruderdüse. Dies hat üblicherweise zur Folge, dass Material plötzlich vermehrt aus der Extruderdüse herausgepresst wird, dem Fachmann ist diese Phänomen bekannt als Überextrusion, wodurch der Materialfluss nicht mehr gleichmäßig ist und die Oberflächenqualität eines gedruckten Elements stark reduziert wird. Zudem neigt die Extruderdüse durch die Druckunterschiede zur teilweisen oder vollständigen Verstopfung, was zur Unterextrusion führt und die Oberflächenqualität eines gedruckten Elements ebenfalls reduziert. Im Falle einer vollständigen Verstopfung der Extruderdüse führt dies sogar zu Ausfällen der Fertigungsmaschine, um die Extruderdüse zu reinigen. Diese Probleme können durch die Passivierungsschicht vermieden oder reduziert werden, da die Feuchtigkeitsaufnahme durch die Passivierungsschicht reduziert oder sogar vollständig vermieden werden kann.

Das erfindungsgemäße Verfahren kann vorteilhaft weitergebildet werden, indem die Passivierungsschicht auf der Oberfläche des Materialstrangs durch eine Folie gebildet wird. Unter einer Folie wird ein dünnschichtig ausgeformtes, flächiges Material verstanden, welches lediglich Zugkräfte aufnehmen kann. Folien können transparent oder undurchsichtig sein und bestehen häufig aus thermoplastischen Kunststoffen. Aber auch andere Kunststoffe können geeignet sein. Die Folien können auf der Oberfläche des Materialstrangs vollständig oder nur teilweise aufgebracht sein. Dabei bildet die Folie vorzugsweise eine nahtlose Passivierungsschicht auf der Oberfläche des Materialstrangs aus. Derartige Folien lassen sich besonders gut durch Extrusionsverfahren und auch durch Koextrusionsverfahren erzeugen. Bei Koextrusionsverfahren wird vorzugsweise erst der Materialstrang geformt und dann eine Folie darüber geformt. Dies erfolgt wie im Vorangegangenen beschrieben, durch die Ausgestaltung des Extrusionswerkzeugs.

Es ist besonders bevorzugt, dass die Folie einen Folienschlauch um den Materialstrang bildet und den Materialstrang ummantelt. Unter einem Folienschlauch soll ein Schlauch verstanden werden, der aus einer Folie besteht. Das Extrusionswerkzeug ist hierbei ausgebildet, dass umlaufend um eine Austrittsöffnung des Extrusionswerkzeugs, aus der der Materialstrang austritt, eine weitere schlitzförmige Austrittsöffnung angeordnet ist, aus der das Passivierungsmaterial austritt. So kann das Passivierungsmaterial auf Materialstrang aufgebracht werden, wodurch die Passivierungsschicht auf dem Materialstrang aufgetragen wird.

Vorzugsweise wird solch ein Folienschlauch dadurch gebildet, dass der Materialstrang mit einem größeren Materialvorschub extrudiert als die Passivierungsschicht bzw. das Passivierungsmaterial. Dazu werden die Austrittsmengen der wenigstens zwei Extruder entsprechend angepasst. Dadurch wird erreicht, dass der Materialstrang schneller aus dem Extrusionswerkzeug austritt, als die koextrudierte Passivierungsschicht, was zur Folge hat, dass der Materialstrang die Passivierungsmaterial aus der umlaufenden schlitzförmigen Austrittsöffnung des Extrusionswerkzeugs "zieht". Durch die entstehende Zugkraft auf die Passivierungsschicht längt sich die Passivierungsschicht in Richtung der Längsrichtung des Materialstrangs. Weiterhin verjüngt sich das Passivierungsmaterial durch die Zugkraft in Längsrichtung des Materialstrangs. Das heißt, dass sich die Dicke des Materials reduziert, und gleichzeitig der Durchmesser des Folienschlauches in Richtung der Längsrichtung des Materialstrangs verjüngt. Dadurch wird der Folienschlauch im Weiteren auf die haftklebrige Oberfläche des Materialstrangs aufgetragen und ummantelt diesen.

Folienschläuche lassen sich vorteilhafterweise durch Ethylen-Vinylalkohol-Copolymer oder Ethylen-Vinylacetat-Copolymer oder Hochdruck-Polyethylen ausbilden. Aber auch andere Materialien, vorzugsweise thermoplastische Materialien lassen sich vorteilhaft einsetzen.

Die Ummantelung mittels eines Folienschlauches ist besonders vorteilhaft, da dann die Oberfläche des haftklebrigen Materialstrangs durch ein Passivierungsmaterial vollständig bedeckt wird und das so bereitgestellt Klebstofffilament auf der gesamten Oberfläche des Klebstofffilaments nicht mehr oder nur geringfügig haftklebrig ist. Dadurch lässt sich das Klebstofffilament dann besonders einfach handhaben und verarbeiten ohne zu verkleben.

Ein weiterer Vorteil der Ausbildung der Passivierungsschicht als einen Folienschlauch besteht darin, dass ein Folienschlauch besonders dazu geeignet ist, Zugkräfte aufzunehmen. Dies ist vorteilhaft, da Fertigungsmaschinen für die Verarbeitung von Kunststofffilamenten ausgelegt sind, und damit ein erfindungsgemäßes Klebstofffilament häufig großen Zugkräften ausgesetzt ist. Der Grund hierfür liegt darin, dass die Fertigungsmaschinen so konzipiert sind, dass Kunststofffilamente von Wickelkernen abgewickelt werden, indem ein kurzer Abschnitt eines Kunststofffilaments in eine Abwickelvorrichtung, eingespannt wird, beispielsweise zwei gegenläufig drehende angetriebene Laufräder. Auch durch Umlenkungen, z. B. über Führungsrollen in einer Fertigungsmaschine werden Zugkräfte in einem Klebstofffilament vergrößert. Materialien mit hoher Zugfestigkeit können solch große Zugkräfte besser aufnehmen als Materialien mit geringerer Zugfestigkeit. Durch Aufbringen einer Passivierungsschicht erhöht sich die Zugfestigkeit eines Materialverbunds aus Materialstrang und Passivierungsschicht im Vergleich zu der Zugfestigkeit des Materialstrangs als solchen. Vorzugsweise hat das Passivierungsmaterial eine größere Zugfestigkeit als die Haftklebemasse. Besonders bevorzugt kann es sein, dass der Folienschlauch aus monoaxial verstrecktem Polypropylen oder monoaxial verstrecktem Polyethylen besteht. Diese Materialien können Zugkräfte besonders gut aufnehmen und reißen daher erst bei höheren Zugkräften als unverstreckte Materialien.

Somit bildet sich ein Materialverbund, bei dem die Passivierungsschicht den überwiegenden Teil einer auf ein Klebstofffilament einwirkenden Zugkraft aufnimmt, während der Materialstrang aus Haftklebemasse einem geringen Anteil der einwirkenden Zugkraft aufnimmt. Besonders ausgeprägt ist dieser Effekt, wenn die Passivierungsschicht als ein Folienschlauch ausgebildet ist

Es kann besonders bevorzugt sein, dass die Passivierungsschicht monoaxial verstrecktes Polypropylen oder monoaxial verstrecktes Polyethylen umfasst. Diese Materialien zeichnen sich dadurch aus, dass sie deutlich verbesserte mechanische Eigenschaften in Längsrichtung aufweisen, wobei hier die Längsrichtung der Längsrichtung des Klebstofffilaments entspricht. Insbesondere kann ein erfindungsgemäßes Klebstofffilament durch den Einsatz von monoaxial verstrecktem Polypropylen oder monoaxial verstrecktem Polyethylen als Passivierungsschicht besonders hohe Zugkräfte aufnehmen. Insbesondere sind die Zugkräfte, die ein Klebstofffilament aufnehmen kann, ohne zu reißen, bei Verwendung dieser Materialien größer, als bei der Verwendung von Polypropylen oder Polyethylen wenn diese nicht monoaxial verstreckt sind. Somit kann die Passivierungsschicht durch monoaxial verstrecktes Polypropylen oder monoaxial verstrecktes Polyethylen bei gleichbleibender Zugfestigkeit des Materialverbundes dünner ausgeführt werden als durch mit nicht monoaxial verstrecktes Polypropylen oder Polyethylen.

Die vorteilhaften Wirkungen einer Passivierungsschicht aus einem thermoplastischen Material treten bei einem vollständig von einer Passivierungsschicht ummantelten Materialstrang besonders ausgeprägt auf.

Das erfindungsgemäße Verfahren kann vorteilhaft weitergebildet werden, indem das Aufbringen der Passivierungsschicht durch Aufbringen eines pulverförmigen Materials erfolgt. Dabei kann unter dem Begriff pulverförmig auch puderförmig oder staubförmig oder mehlförmig verstanden werden. Demgemäß kann eine erfindungsgemäße Passivierungsschicht auch ausgebildet werden, indem auf dem haftklebrigen Materialstrang ein pulverförmiges Material aufgetragen ist. Als pulverförmiges Material eignen sich in vorteilhafter Weise Talkum oder pulverförmige Kreide oder pyrogene Kieselsäure oder Quarzmehl oder Kalksteinmehl oder gemahlener Schwerspat oder gemahlener Glimmer. Die Passivierungsschicht kann einen oder mehrere dieser Stoffe umfassen oder ausschließlich aus einem dieser Stoffe bestehen.

Als pulverförmige Materialien setzen sich aus einer Vielzahl von Materialpartikeln zusammen. Die Materialpartikel haben hier bevorzugt einen Durchmesser von 1 µm bis 100 µm. Die Angabe des Durchmessers bezieht sich auf den Äquivalentdurchmesser der Materialpartikel. Vorteilhaft ist es, wenn der Äquivalentdurchmesser der Materialpartikel weniger als ein Dreißigstel des Durchmessers des Klebstofffilaments beträgt, bevorzugt beträgt der Äquivalentdurchmesser weniger als ein Fünfzigstel des Durchmessers des Materialstrangs.

Durch Aufbringen eines pulverförmigen Materials wird sichergestellt, dass das Klebstofffilament nicht verkleben kann, da die puderförmige Substanz auf der haftklebrigen Oberfläche des Materialstrangs haftet. Vorzugsweise ist die Passivierungsschicht auf der vollständigen Oberfläche des Materialstrangs ausgebildet. Dadurch lässt sich das Klebstofffilament dann besonders einfach handhaben und verarbeiten ohne dabei zu verkleben.

Das erfindungsgemäße Verfahren kann vorteilhaft weitergebildet werden, indem in einem weiteren Schritt das Klebstofffilament auf einen Wickelkern aufgewickelt wird. Somit wird das Klebstofffilament in eine Form gebracht, in der es zum einen besonders gut transportiert und platzsparend gelagert werden kann. Zum anderen eignet sich ein Wickelkern besonders gut dazu, um in einer bestehenden Verarbeitungsmaschine eingesetzt zu werden, da die bestehenden Kunststofffilamente ebenfalls von Wickelkernen abgewickelt werden.

Die Aufgabe wird in ihrem zweiten Aspekt durch ein Klebstofffilament mit den Merkmalen des Anspruchs 8 gelöst. Vorteilhafte Weiterbildungen ergeben sich aus den Unteransprüchen.

Demgemäß betrifft die Erfindung ein Klebstofffilament umfassend eine Haftklebemasse und eine Passivierungsschicht, wobei die Haftklebemasse die Form eines Materialstrangs aufweist, und die Passivierungsschicht auf der Oberfläche des Materialstrangs aufgebracht ist, wobei der Durchmesser des Klebstofffilaments 1,75 mm ± 0,15 mm oder 2,85 mm ± 0,25 mm oder 3,0 mm ± 0,25 mm beträgt. Zu den Eigenschaften und Vorteilen des erfindungsgemäßen Klebstofffilaments sei auf die vorangegangen Ausführungen verwiesen.

Das erfindungsgemäße Klebstofffilament kann vorteilhaft weitergebildet werden, indem die Haftklebemasse wenigstens einen Füllstoff umfasst, insbesondere dass die Haftklebemasse pyrogene Kieselsäure oder Quarzmehl oder Kalksteinmehl oder gemahlene Kreiden oder Schwerspat oder Talkum oder Glimmer oder Glasvollkugeln oder Glashohlkugeln umfasst.

Weiterhin kann die Haftklebemasse mindestens einen Füllstoff umfassen. Durch Füllstoffe können die mechanischen und/oder chemischen Eigenschaften des Klebstofffilaments eingestellt werden. Bevorzugt handelt es sich bei dem Füllstoff um Pyrogene Kieselsäure, Quarzmehl, Kalksteinmehl, gemahlene Kreiden, Schwerspat, Talkum, Glimmer oder Glasvollkugeln. Diese Materialien verhalten sich überwiegend chemisch inert zu den Synthesekautschuk und Harzkomponenten. Weiterhin bevorzugt können Glashohlkugeln eingesetzt werden. Dieser Füllstoff hat den Vorteil, dass er chemisch inert ist zu der Klebmasse und zudem die die Anfassklebrigkeit der nach dem Verarbeiten des Klebstofffilaments kaum reduziert.

Das erfindungsgemäße Klebstofffilament kann vorteilhaft weitergebildet werden, indem eine Dicke der Passivierungsschicht 1 µm bis 500 µm beträgt, vorzugsweise 20 µm bis 300 µm beträgt. Zu den Eigenschaften und Vorteilen des erfindungsgemäßen Klebstofffilaments sei auf die vorangegangen Ausführungen verwiesen.

Der Durchmesser des Klebstofffilaments beträgt 1,75 mm ± 0,15 mm oder 2,85 mm ± 0,25 mm oder 3,0 mm ± 0,25 mm Diese Durchmesser sind besonders vorteilhaft, da existierende Fertigungsmaschinen vorzugsweise diese Durchmesser verarbeiten können ohne die Maschinen anzupassen. Besonders bevorzugt kann ein Nenndurchmesser von 1,75 mm oder kleiner sein, da ein dünneres Klebstofffilament einen geringeren Staudruck in der Extruderdüse zur Folge hat und daher zu einer geringeren Belastung der Extruderdüse führt. Weiterhin kann es bevorzugt sein, dass das Klebstofffilament einen Nenndurchmesser von 2,85 mm oder 3,00 mm oder größer aufweist, da dann das Klebstofffilament weniger zum Dehnen und/oder Stauchen neigt, wenn das Klebstofffilament bei der Verarbeitung in einer Fertigungsmaschine gefördert wird.

Das erfindungsgemäße Klebstofffilament kann vorteilhaft weitergebildet werden, indem die Haftklebemasse wenigsten einen Füllstoff umfasst. Durch Füllstoffe können die mechanischen und/oder chemischen Eigenschaften des Klebstofffilaments eingestellt werden. Bevorzugt handelt es sich bei dem Füllstoff um Pyrogene Kieselsäure, Quarzmehl, Kalksteinmehl, gemahlene Kreiden, Schwerspat, Talkum, Glimmer oder Glasvollkugeln. Diese Materialien verhalten sich überwiegend chemisch inert zu den Synthesekautschuk und Harzkomponenten. Weiterhin bevorzugt können Glashohlkugeln eingesetzt werden. Dieser Füllstoff hat den Vorteil, dass er chemisch inert ist zu der Klebmasse und zudem die die Anfassklebrigkeit der nach dem Verarbeiten des Klebstofffilaments kaum reduziert.

Gemäß eines dritten Aspekts betrifft die Erfindung eine Klebstoffrolle, mit einem vorgenannten erfindungsgemäßen Klebstofffilament. Dabei weist die Klebstoffrolle einen Wickelkern auf, wobei das Klebstofffilament auf dem Wickelkern aufgewickelt ist. Da das Klebstofffilament auf der Oberfläche durch das vorgenannte Verfahren nicht mehr haftklebrig ist, können mehrere übereinanderliegende Lagen auf dem Wickelkern aufgewickelt werden. Das Klebstofffilament lässt sich auf diese Weise zum einen besonders gut transportieren und platzsparend lagern. Zum anderen eignet sich solch eine Klebstoffrolle besonders gut dazu, um das Klebstofffilament in einer bestehenden Verarbeitungsmaschine bereitzustellen, da in bestehenden Verarbeitungsmaschinen, Kunststofffilamente ebenfalls von Rollen abgewickelt werden. Somit ist keine oder nur wenige Anpassungen bestehender Verarbeitungsmaschinen erforderlich.

Gemäß eines vierten Aspekts betrifft die Erfindung ein gedrucktes Element aus einem erfindungsgemäßen Klebstofffilament besteht oder dieses umfasst. Bei einem gedruckten Element handelt es sich um ein Element, welches vollständig oder teilweise aus dem Klebstofffilament besteht. Dazu wurde das Klebstofffilament in einer Verarbeitungsmaschine in einem Extruderkopf aufgeschmolzen und durch eine Extruderdüse auf eine Bauunterlage abgelegt, auf der das aufgeschmolzene erfindungsgemäße Klebstofffilament dann wieder erstarrt. Dadurch, dass das Klebstofffilament aufgeschmolzen wurde, ist die Passivierungsschicht und ggf. das Passivierungsmittel mit der Klebemasse vermengt worden. Dadurch befinden sich die Passivierungsschicht und ggf. das Passivierungsmittel, nicht mehr auf der Oberfläche und die Haftklebemasse ist auf ihrer Oberfläche wieder haftklebrig. Ein gedrucktes Element kann aber auch direkt auf einem Bauteil abgelegt sein und dort in wenigsten einer Lage aufgetragen werden.

Das gedruckte Element ist als ein gedrucktes Klebelement zu verstehen, also ein gedrucktes haftklebriges Element. Dadurch, dass ein gedrucktes Element wie hier beschrieben in durch in einen Druckvorgang nach dem Strangablegeverfahren erzeugt wird und bei dem das hier beschriebene Klebstofffilament verarbeitet wird, kann das gedruckte Element bzw. das gedruckte Klebelement in verschiedensten geometrischen Formen erzeugt werden.

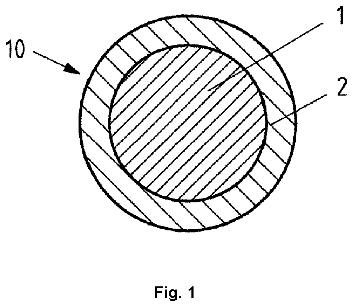

Die Erfindung wird anhand des Beispiels in der Figur 1 beschrieben. Gleiche Elemente sind mit den gleichen Bezugszeichen versehen. Es zeigen:
- Fig. 1: Einen Querschnitt durch das erfindungsgemäße Klebstofffilament

Fig. 1 zeigt exemplarisch einen nicht maßstabsgetreuen Querschnitt durch ein erfindungsgemäßes Klebstofffilament 10. Der Querschnitt befindet sich senkrecht zur Längsrichtung des Klebstofffilaments. Das Klebstofffilament 10 besteht aus einer zu einem Materialstrang geformten Haftklebemasse 1 und einer Passivierungsschicht 2. Die Passivierungsschicht umgibt den Materialstrang 1 aus Haftklebemasse vollständig und passiviert die Oberfläche. Die Dicke der Passivierungsschicht beträgt einige 10 µm und ist im Verhältnis zum Durchmesser des Klebstofffilaments sehr gering (keine maßstabsgetreue Darstellung). Der Durchmesser des Klebstofffilaments beträgt üblicherweise 1,75 mm oder 2,75 mm oder 3,0 mm. Ein Materialstrang kann aber auch andere Durchmesser aufweisen, insbesondere Durchmesser, die zwischen den vorgenenannten Durchmessern liegen.

### Bezugszeichenliste

- 1: Materialstrang aus Haftklebemasse
- 2: Passivierungsschicht
- 10: Klebstofffilament

## Patentansprüche

1. Verfahren zum Herstellen eines Klebstofffilaments (10) aus einer Haftklebemasse, mit den Schritten:
a) Bereitstellen der Haftklebemasse,
b) Formen der Haftklebemasse zu einem Materialstrang (1), wobei der Materialstrang (1) durch ein Extrusionsverfahren aus der Haftklebemasse geformt wird,
c) Aufbringen einer Passivierungsschicht (2) auf der Oberfläche des Materialstrangs (1).
wobei in Schritt c) die Passivierungsschicht (2) durch ein Koextrusionsverfahren auf der Oberfläche des Materialstrangs (1) aufgebracht wird.

2. Verfahren nach Anspruch 1, wobei in Schritt c) die Passivierungsschicht (2) auf der Oberfläche des Materialstrangs (1) durch eine Folie gebildet wird.

3. Verfahren nach einem der vorhergehenden Ansprüche, wobei in einem weiteren Schritt das Klebstofffilament (10) auf einen Wickelkern aufgewickelt wird.

4. Vorrichtung zum Durchführen des Verfahrens nach einem der Ansprüche 1 oder 2, **dadurch gekennzeichnet, dass**
die Vorrichtung ein Formelement zum Formen einer Haftklebemasse umfasst und eine Behandlungsvorrichtung zum Aufbringen einer Passivierungsschicht (2) auf der Oberfläche des Materialstrangs (1).

5. Klebstofffilament (10) umfassend eine Haftklebemasse und eine Passivierungsschicht (2), wobei die Haftklebemasse die Form eines Materialstrangs (1) aufweist und die Passivierungsschicht (2) auf einer Oberfläche des Materialstrangs (1) aufgebracht ist,
**dadurch gekennzeichnet, dass** der Durchmesser des Klebstofffilaments (10) 1,75 mm ± 0,15 mm oder 2,85 mm ± 0,25 mm oder 3,0 mm ± 0,25 mm beträgt.

6. Klebstofffilament (10) nach Anspruch 5, **dadurch gekennzeichnet, dass** die Passivierungsschicht (2) aus einem thermoplastischen Material gebildet wird.

7. Klebstofffilament (10) nach Anspruch 6, **dadurch gekennzeichnet, dass** das thermoplastische Material Ethylen-Vinylacetat-Copolymer oder Ethylen-Vinylalkohol-Copolymer oder Polyethylenterephthalat oder Polypropylen oder Polyethylen oder Hart-Polyethylen umfasst und/oder die Passivierungsschicht (2) monoaxial verstrecktes Polypropylen oder monoaxial verstrecktes Polyethylen umfasst.

8. Klebstofffilament (10) nach einem der Ansprüche 6 bis 7, **dadurch gekennzeichnet, dass** die Passivierungsschicht (2) durch eine Folie ausgebildet wird.

9. Klebstofffilament (10) nach einem der Ansprüche 5 bis 8, **dadurch gekennzeichnet, dass** eine Dicke der Passivierungsschicht (2) 1 µm bis 500 µm beträgt, vorzugsweise 10 µm bis 100 µm beträgt.

10. Klebstofffilament (10) nach einem der Ansprüche 5 bis 9, **dadurch gekennzeichnet, dass** die Haftklebemasse wenigstens einen Füllstoff umfasst, insbesondere dass die Haftklebemasse pyrogene Kieselsäure oder Quarzmehl oder Kalksteinmehl oder gemahlene Kreiden oder Schwerspat oder Talkum oder Glimmer oder Glasvollkugeln oder Glashohlkugeln umfasst.

11. Klebstoffrolle, mit einem Klebstofffilament (10) nach einem der Ansprüche 5 bis 10 und einem Wickelkern, wobei das Klebstofffilament (10) auf dem Wickelkern aufgewickelt ist.

12. Gedrucktes Element, **dadurch gekennzeichnet, dass**
das gedruckte Element ein Klebstofffilament (10) gemäß einem der Ansprüche 5 bis 10 umfasst oder aus diesem besteht.

## Claims

1. Method for producing a filament (10) of adhesive from a pressure sensitive adhesive, with the steps of:
a) providing the pressure sensitive adhesive,
b) shaping the pressure sensitive adhesive into a strand (1) of material, the material strand (1) being shaped from the pressure sensitive adhesive by an extrusion process,
c) applying a passivating layer (2) on the surface of the material strand (1),
where in step c) the passivating layer (2) is applied on the surface of the material strand (1) by a coextrusion process.

2. Method according to Claim 1, where in step c) the passivating layer (2) is formed on the surface of the material strand (1) by a film.

3. Method according to either of the preceding claims, where in a further step the adhesive filament (10) is wound onto a winding core.

4. Apparatus for implementing the method according to either of Claims 1 and 2, **characterized in that**
the apparatus comprises a shaping element for shaping a pressure sensitive adhesive and comprises a treatment apparatus for applying a passivating layer (2) on the surface of the material strand (1).

5. Filament (10) of adhesive, comprising a pressure sensitive adhesive and a passivating layer (2), where the pressure sensitive adhesive has the shape of a material strand (1) and the passivating layer (2) is applied on a surface of the material strand (1), **characterized in that** the diameter of the adhesive filament (10) is 1.75 mm ± 0.15 mm or 2.85 mm ± 0.25 mm or 3.0 mm ± 0.25 mm.

6. Adhesive filament (10) according to Claim 5, **characterized in that** the passivating layer (2) is formed from a thermoplastic material.

7. Adhesive filament (10) according to Claim 6, **characterized in that** the thermoplastic material comprises ethylene-vinyl acetate copolymer or ethylene-vinyl alcohol copolymer or polyethylene terephthalate or polypropylene or polyethylene or rigid polyethylene and/or the passivating layer (2) comprises monoaxially oriented polypropylene or monoaxially oriented polyethylene.

8. Adhesive filament (10) according to either of Claims 6 and 7, **characterized in that** the passivating layer (2) is formed by a film.

9. Adhesive filament (10) according to any of Claims 5 to 8, **characterized in that** a thickness of the passivating layer (2) is 1 µm to 500 µm, preferably 10 µm to 100 µm.

10. Adhesive filament (10) according to any of Claims 5 to 9, **characterized in that** the pressure sensitive adhesive comprises at least one filler, more particularly in that the pressure sensitive adhesive comprises fumed silica or quartz flour or limestone flour or ground chalks or barite or talc or mica or solid glass beads or hollow glass beads.

11. Roll of adhesive, with an adhesive filament (10) according to any of Claims 5 to 10 and a winding core, the adhesive filament (10) being wound onto the winding core.

12. Printed element, **characterized in that**
the printed element comprises or consists of an adhesive filament (10) according to any of Claims 5 to 10.

## Revendications

1. Procédé de fabrication d'un filament adhésif (10) à partir d'une masse auto-adhésive, comprenant les étapes suivantes :
a) la fourniture de la masse auto-adhésive,
b) la mise en forme de la masse auto-adhésive en un cordon de matériau (1), le cordon de matériau (1) étant mis en forme à partir de la masse auto-adhésive par un procédé d'extrusion,
c) l'application d'une couche de passivation (2) sur la surface du cordon de matériau (1),
dans lequel, à l'étape c), la couche de passivation (2) est appliquée sur la surface du cordon de matériau (1) par un procédé de coextrusion.

2. Procédé selon la revendication 1, dans lequel, à l'étape c), la couche de passivation (2) est formée sur la surface du cordon de matériau (1) par un film.

3. Procédé selon l'une quelconque des revendications précédentes, dans lequel, dans une étape supplémentaire, le filament adhésif (10) est enroulé sur un noyau d'enroulement.

4. Dispositif pour la réalisation du procédé selon l'une quelconque des revendications 1 ou 2, **caractérisé en ce que** le dispositif comprend un élément de mise en forme pour mettre en forme une masse auto-adhésive et un dispositif de traitement pour appliquer une couche de passivation (2) sur la surface du cordon de matériau (1).

5. Filament adhésif (10) comprenant une masse auto-adhésive et une couche de passivation (2), dans lequel la masse auto-adhésive présente la forme d'un cordon de matériau (1) et la couche de passivation (2) est appliquée sur une surface du cordon de matériau (1), **caractérisé en ce que** le diamètre du filament adhésif (10) est de 1,75 mm ± 0,15 mm ou de 2,85 mm ± 0,25 mm ou de 3,0 mm ± 0,25 mm.

6. Filament adhésif (10) selon la revendication 5, **caractérisé en ce que** la couche de passivation (2) est formée d'un matériau thermoplastique.

7. Filament adhésif (10) selon la revendication 6, **caractérisé en ce que** le matériau thermoplastique comprend un copolymère d'éthylène-acétate de vinyle ou un copolymère d'éthylène-alcool vinylique ou du polyéthylène téréphtalate ou du polypropylène ou du polyéthylène ou du polyéthylène dur et/ou la couche de passivation (2) comprend du polypropylène étiré monoaxialement ou du polyéthylène étiré monoaxialement.

8. Filament adhésif (10) selon l'une quelconque des revendications 6 à 7, **caractérisé en ce que** la couche de passivation (2) est formée par un film.

9. Filament adhésif (10) selon l'une quelconque des revendications 5 à 8, **caractérisé en ce qu'**une épaisseur de la couche de passivation (2) est de 1 µm à 500 µm, de préférence de 10 µm à 100 µm.

10. Filament adhésif (10) selon l'une quelconque des revendications 5 à 9, **caractérisé en ce que** la masse auto-adhésive comprend au moins une charge, notamment **en ce que** la masse auto-adhésive comprend de la silice pyrogénée ou de la poudre de quartz ou de la poudre de calcaire ou de la craie broyée ou de la barytine ou du talc ou du mica ou des billes de verre pleines ou des billes de verre creuses.

11. Rouleau adhésif, comprenant un filament adhésif (10) selon l'une quelconque des revendications 5 à 10 et un noyau d'enroulement, dans lequel le filament adhésif (10) est enroulé sur le noyau d'enroulement.

12. Élément imprimé, **caractérisé en ce que** l'élément imprimé comprend un filament adhésif (10) selon l'une quelconque des revendications 5 à 10 ou est constitué de celui-ci.
